# EUROPEAN PATENT APPLICATION

(11) **EP 0 824 955 A1**
(43) Date of publication of application: **25.02.1998**
(21) Application number: 97306444.7
(22) Date of filing: 22.08.1997
(51) Int. Cl.: B01D 53/94, B01J 23/10

(54) **Exhaust emission control composite catalyst assembly, and exhaust emission control modifying catalyst**

(30) Priority: 23.08.1996 JP 222778/96
(71) Applicant: HONDA GIKEN KOGYO KABUSHIKI KAISHA, Minato-ku Tokyo (JP)
(72) Inventor: Satoh, Naohiro, 1-4-1 Chuo, Wako-shi, Saitama-ken (JP); Terada, Kazuhide, 1-4-1 Chuo, Wako-shi, Saitama-ken (JP); Sugiyama, Tomomi, 1-4-1 Chuo, Wako-shi, Saitama-ken (JP)
(74) Representative: Matthews, Derek Peter

(57) **Abstract**

A composite catalyst assembly (3) which exhibits and excellent NOx conversion capability in an excessive-oxygen atmosphere, such as an exhaust gas from an internal combustion engine. The composite catalyst assembly (3) includes a modifying catalyst (4) for modifying the exhaust gas, and an NOx catalyst (5) for decomposing NOx in the modified exhaust gas. The modifying catalyst (4) includes a rare earth element as an active species. The rare earth element is used in the form of an oxide. CeO₂ having a diameter D of crystallites equal to 13.3 nm corresponds to the oxide.

## Description

The present invention relates to an exhaust emission control composite catalyst assembly, and particularly, to an improvement in an exhaust emission control composite catalyst assembly including a modifying catalyst for modifying an exhaust gas and an NOx catalyst for decomposing NOx (nitrogen oxides) in the modified exhaust gas, and to an exhaust emission control modifying catalyst.

### Background of the Invention

This type of composite catalyst assembly is used for decomposing NOx in an excessive-oxygen atmosphere using HC (hydrocarbon)as a reducing agent.

There is a conventionally known composite catalyst assembly which includes a modifying catalyst disposed upstream in an exhaust gas passage for converting a paraffinic hydrocarbon in an exhaust gas into an olefinic hydrocarbon, and an NOx catalyst disposed downstream in the exhaust gas passage (see Japanese Patent Application Laid-open No. 1-247710).

The reason why a modifying catalyst of the above-describe type is used is that the olefinic hydrocarbon is stronger in reducing effect to NOx than the paraffinic hydrocarbon.

However, the known composite catalyst assembly suffers from a problem that an oxidizing reaction of HC by O₂, i.e., HC + O₂ → H₂O + COₓ in addition to a reducing reaction of NOx by HC, i.e., NO + HC + O₂ → N₂ + COₓ + H₂O is advanced in the presence of the NOx catalyst in the excessive-oxygen atmosphere and hence, the amount of HC attributing to the reduction of NOx is decreased, resulting in a decreased NOx conversion rate.

### Summary of the Invention:

It is an object of the present invention to provide an exhaust emission control composite catalyst assembly, wherein the NOx conversion rate can be remarkably increased by use of a particular modifying catalyst.

To achieve the above object, according to the present invention, there is provided an exhaust emission control composite catalyst assembly comprising a modifying catalyst for modifying an exhaust gas, and an NOx catalyst for decomposing NOx in the modified exhaust gas, wherein the modifying catalyst includes a rare earth element as an active species.

With the above configuration, if an exhaust gas is brought into contact with the modifying catalyst, an oxidizing reaction represented by NO + O₂ → NO₂ and an oxidizing reaction represented by HC + O₂ → active CHO and/or active HC are caused, wherein NO₂ is chemically active; the active CHO is an oxide intermediate resulting from partial oxidization of HC by O₂; and the active HC is a radical resulting from partial separation of H, or an olefinic hydrocarbon active for reduction of NOx.

If the modified exhaust gas is brought into contact with the NOx catalyst, reducing reactions represented by NO₂ + active CHO (and/or active HC) → N₂ + COx + H₂O and NO + active CHO (and/or active HC) + O₂ → N₂ + COx + H₂O are caused. Thus, the NOx conversion rate can be increased remarkably.

### BRIEF DESCRIPTION OF THE DRAWINGS:

Fig. 1 is a schematic illustration of an exhaust emission control device including a first example of a composite catalyst assembly.

Fig. 2 is an illustration for explaining CeO ₂.

Fig. 3 is a graph illustrating a relationship between the treating time and an average diameter D of crystallites of CeO₂.

Fig. 4 is a graph illustrating a first example of a relationship between gas temperature and NOx conversion rate.

Fig. 5 is a graph illustrating a second example of the relationship between the gas temperature and the NOx conversion rate.

Fig. 6 is a graph illustrating NOx conversion rates provided by four examples of composite catalyst assemblies and an NOx catalyst.

Fig. 7 is a sectional view of an essential portion of a second example of a composite catalyst assembly.

Fig. 8 is a sectional view of an essential portion of a third example of a composite catalyst assembly.

Fig. 9 is a sectional view of an essential portion of a fourth example of a composite catalyst assembly.

### Description of the Preferred Embodiments:

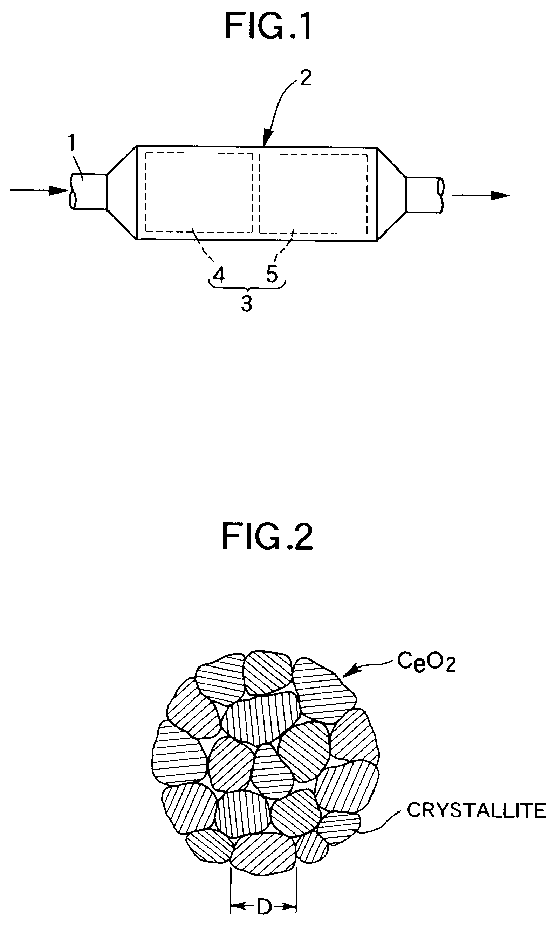

Referring to Fig. 1, an exhaust emission control device 2 is mounted in an exhaust system 1 of an engine for a vehicle. The device 2 includes a composite catalyst assembly 3 which is disposed upstream in the flow of an exhaust gas. The composite catalyst means 3 includes a modifying catalyst 4 for modifying the exhaust gas, and an NOx catalyst 5 disposed downstream in the exhaust gas flow for decomposing NOx in the modified exhaust gas.

The modifying catalyst 4 has a rare earth element as an active species. At least one element selected from the group consisting of Ce, Nd, Pr and La corresponds to the rare earth element. These rare earth elements are used in the form of oxides which are CeO₂, Nd₂O₃, Pr₆O₁₁, La₂O₃.

The NOx catalysts 5 which may be used are known catalysts such as a Cu-carried modified ZSM-5 zeolite, an Ag-carried Al₂O₃ (active alumina), a Pt-carried Al₂O₃ (active alumina), an Ir-carried SiC, an Ir-carried silicate, an Ir/alkaline earth metal carried SiC and the like. Two examples of the present invention will now be described.

### Example I:

The modifying catalyst used is CeO₂ with Ce serving as the active species.

When CeO₂ is brought into contact with an exhaust gas in an excessive-oxygen atmosphere, it causes an oxidizing reaction represented by NO + O₂ → NO₂, and an oxidizing reaction represented by HC + O₂ → active CHO and/or active HC, as described above.

The CeO₂ is in the form of polycrystalline grains each of which is comprised of a plurality of crystallites congregated together, as shown in Fig. 2. In order to allow the CeO₂ to sufficiently exhibit the above function, the average diameter D of the crystallites of the CeO₂ is set in a range of D ≥ 12nm. The reason is that the CeO₂ having an average diameter D of crystallites smaller than 12 nm exhibits a characteristic to adsorb NOx in an exhaust gas at a low temperature and to desorb the adsorbed NOx at a temperature equal to or higher than 350°C and hence, the NOx conversion rate at the high temperature is low. To produce CeO₂ having an average diameter of crystallites in the range of D ≥ 12nm, CeO₂ having an average diameter of crystallites smaller than 12nm may be subjected to a calcining treatment at 700°C for 3 hours.

For the calculation of a diameter D₍ₕₖₗ₎ of crystallites, the Schuler equation, i.e., D₍ₕₖₗ₎ 0.9 λ(β_{1/2} · cos θ) was used, wherein hkl is Miller index; λ is a wavelength (Å) of characteristic X rays; β_{1/2} is a half-value width (a radian) of a (hkl) face; and θ is a reflection angle of X rays. Therefore, for the CeO₂, D₍₁₁₁₎ of each of the crystallites was calculated by measuring the half-value width β_{1/2} of a (111) face from an X-ray diffraction pattern, and an average diameter D of the crystallites was determined from the D₍₁₁₁₎ of each crystallite.

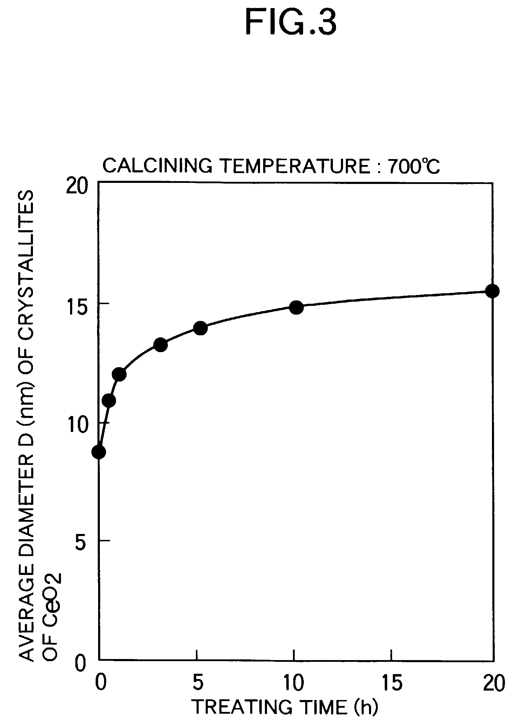

Table 1 shows the relationship between the calcining time at a calcining temperature of 700°C. Fig. 3 is a graph taken from table 1.

**Table 1**

| Calcining temperature : 700 °C | |
|---|---|
| Treating time (h) | Average diameter of crystallites (D) (nm) |
| 0 | 8.7 |
| 0.5 | 10.9 |
| 1.0 | 12.0 |
| 3.0 | 13.3 |
| 5.0 | 14.0 |
| 10.0 | 14.9 |
| 20.0 | 15.6 |

It can be seen from Table 1 and Fig. 3 that the average diameter D of the crystallites of the CeO₂ is increased with an increase in treating time.

In addition, as the grain size of CeO₂ is smaller, the probability of contact of the CeO2 with the exhaust gas is higher. Therefore, CeO₂ containing 90 % or more of grains having a grain diameter d in a range of d ≤ 1µm is used.
A. Preparation of Modified Catalyst
(a) A CeO₂ mixture containing about 90 % of CeO₂ (produced by Nikki Corp.) having an average diameter D of crystallites equal to 8.7 nm and a grain diameter d equal to 0.6 µm was subjected to a calcining treatment at 700°C for 3 hours using a muffle furnace at atmospheric pressure, thereby producing CeO₂ having an average diameter D of crystallites equal to 13.3 nm.
(b) 180 grams of the CeO₂, 100 grams of 20 % silica sol and 360 ml of deionized water were placed in a ball mill, where they were subjected to a wet pulverization for 12 hours to prepare a slurry.
(c) A 6 mil honeycomb made of a cordierite and having a diameter of 25.4 mm, a length of 60 mm and 400 cells/in² was immersed into the slurry. Then, the honeycomb was withdrawn from the slurry, and the excessive amount of the slurry on the honeycomb was removed by jetting with air. Thereafter, the honeycomb was left under heating at 150°C for 2 hours to dry the slurry and then it was further subjected to a calcining treatment at 400°C for 12 hours using a muffle furnace at atmospheric pressure to provide a honeycomb having CeO₂ carried thereon. In this case, the amount of CeO₂ carried in the honeycomb was 150 g/liter.

B. Preparation of NOx Catalyst
(a) 30 grams of a Sic powder (made by LONZA Corp., and having a B.E.T. specific surface area of 15 m²/g), 4 grams of 10 % alumina sol and 60 ml of deionized water were placed in a ball mill, where they were subjected to a wet pulverization for 5 hours to prepare a slurry of SiC.
(b) A 6 mil honeycomb made of a cordierite and having a diameter of 25.4 mm, a length of 60 mm and 400 cells/in² was immersed into the slurry. Then, the honeycomb was withdrawn from the slurry, and an excessive amount of the slurry in the honeycomb was removed by jetting with air. Thereafter, the honeycomb was left under heating at 260°C for 30 minutes to dry the slurry and then it was further subjected to a calcining treatment at 500°C for 30 minutes using a muffle furnace at the atmospheric pressure to provide a honeycomb having SiC carried thereon. In this case, the amount of SiC carried in the honeycomb was 100 g/liter.
(c) The honeycomb was immersed into an aqueous solution of a mixture (Ca : Ir = 1:1 by atomic ratio) of iridium chloride (H₂IrCl₆) and calcium chloride (CaCl₂ · 2H2O), whereby Ir and Ca were carried in the honeycomb in amounts of 0.60 g and 0.13 g in the terms of metals per liter of volume of the honeycomb, respectively. The resulting honeycomb core was dried by leaving it under heating at 115°C for 16 hours, and then subjected to a calcining at 800°C for 30 minutes at atmospheric pressure in an electric oven. Further, the honeycomb core was subjected to a reducing treatment at 700°C for 2 hours in a current of 100 % hydrogen gas.

C. Purifying Test on the Supposition of Exhaust Gas
A test gas having a composition shown in Table 2 was prepared as a simulation exhaust gas corresponding to an air-fuel ratio A/F of 22 supposing a low-load lean burn. In Table 2, HC indicates propylene (C₃H₆, olefinic hydrocarbon) or iso-pentane (C₅H₁₂, paraffinic hydrocarbon).

**Table 2**

| Component | Test gas (% by volume) corresponding to A/F of 22 |
|---|---|
| CO₂ | 9.5 |
| H₂ | 0.03 |
| HC | 0.28 |
| NO | 0.013 |
| CO | 0.08 |
| O₂ | 7.4 |
| H₂O | 10.0 |
| N₂ | Balance |

In the purifying test, first, the composite catalyst assembly was placed into a fixed-bed flow reaction device, so that the modifying catalyst was located upstream of the gas flow, and the NOx catalyst was located downstream of the gas flow. Then, the test gas was allowed to flow in the device at a space velocity S.V. equal to 3.5 × 10⁴ h⁻¹, and the temperature of the test gas was increased up to 500°C at a rate of 20°C/min from ambient temperature, while the NOx conversion rate provided by the composite catalyst assembly was measured. A similar purifying test was carried out using only the NOx catalyst.

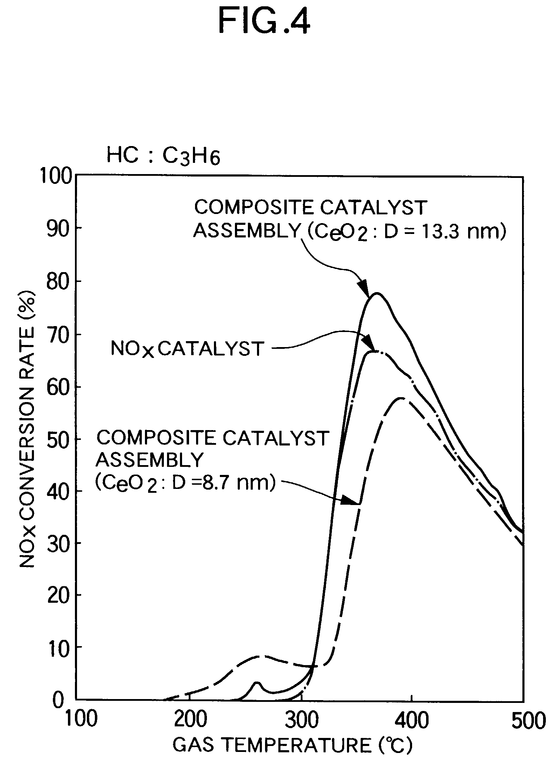

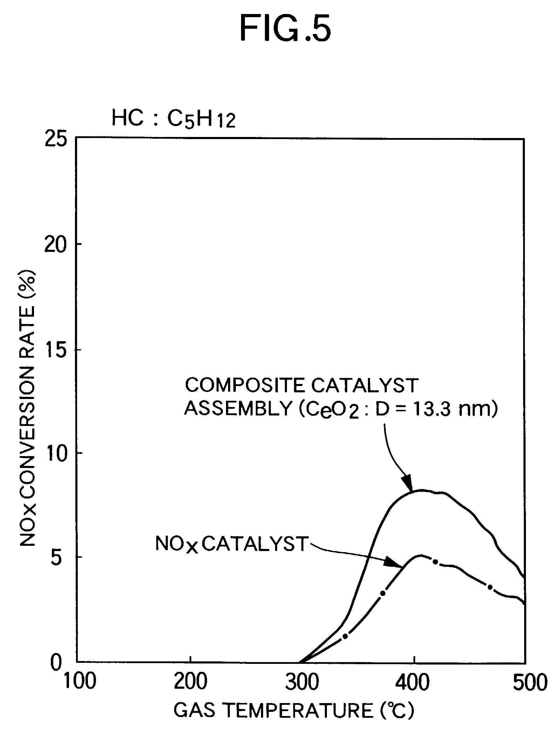

Figs. 4 and 5 show results of the measurements. Fig. 4 corresponds to the case where HC is propylene (C₃H₆), and Fig. 5 corresponds to the case where HC is iso-pentane (C₅H₁₂). It can be seen from Figs. 4 and 5 that the composite catalyst assembly (CeO₂ having an average diameter of crystallites equal to 13.3 nm) according to the embodiment of the present invention exhibits a significantly higher NOx conversion rate as compared with Comparative Example using only the NOx catalyst for both types of HC).

In Fig. 4, a broken line described as composite catalyst assembly (CeO₂ : D = 8.7 nm) shows the case using composite catalyst including CeO₂ having an average diameter D of crystallites equal to 8.7 nm. In this catalyst assembly, the adsorption of NOx by the CeO2 is caused at near a gas temperature of 260°C, resulting in an increased NOx conversion rate, as compared with that provided by the composite catalyst assembly (CeO₂ : D = 13.3nm). On the other hand, the desorption of the adsorbed NOx is caused at near a gas temperature of 400°C, resulting in a decreased NOx conversion rate, as compared with that provided by the composite catalyst assembly (CeO₂ : D = 13.3nm).

### Example II

Using Nd₂O₃, Pr₆O₁₁, La₂O₃ individually, three modifying catalyst were produced by carrying out the above-described steps (b) and (c) in item A in Example I.

Then, three composite catalyst assemblies were formed by combining the modifying catalyst and the NOx catalyst in Example I. A similar purifying test with a simulation exhaust gas to that in item C in Example I was carried out using these catalyst assemblies. The test gas used was a gas containing propylene.

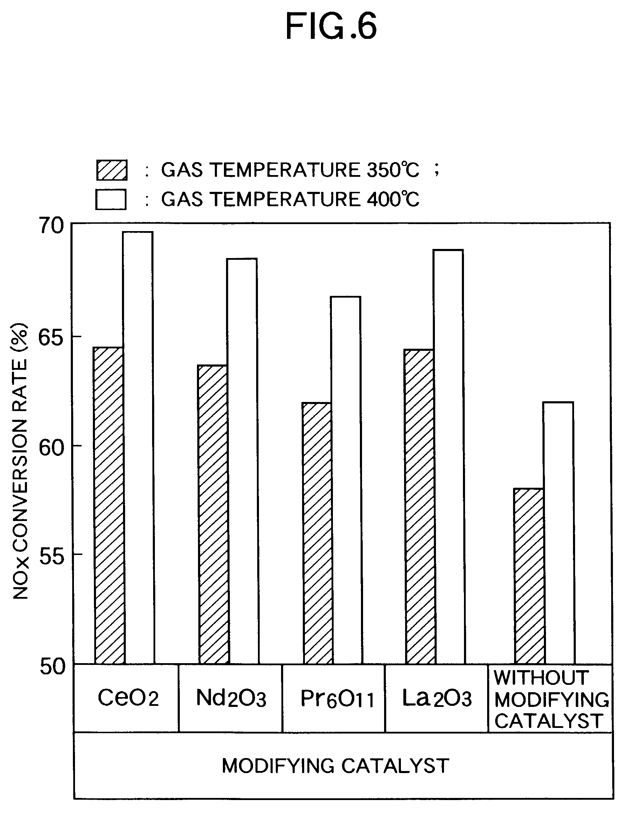

Fig. 6 shows the results of the test. The results provided by the use of the composite catalyst assembly (CeO₂ : D = 13.3nm) and the NOx catalyst (with no modifying catalyst) shown in Fig. 4 are also shown in Fig. 6 for comparison.

As is apparent from Fig. 6, the NOx conversion rate can be remarkably increased by the use of each of the modifying catalysts, as compared with the case where only the NOx catalyst is used.

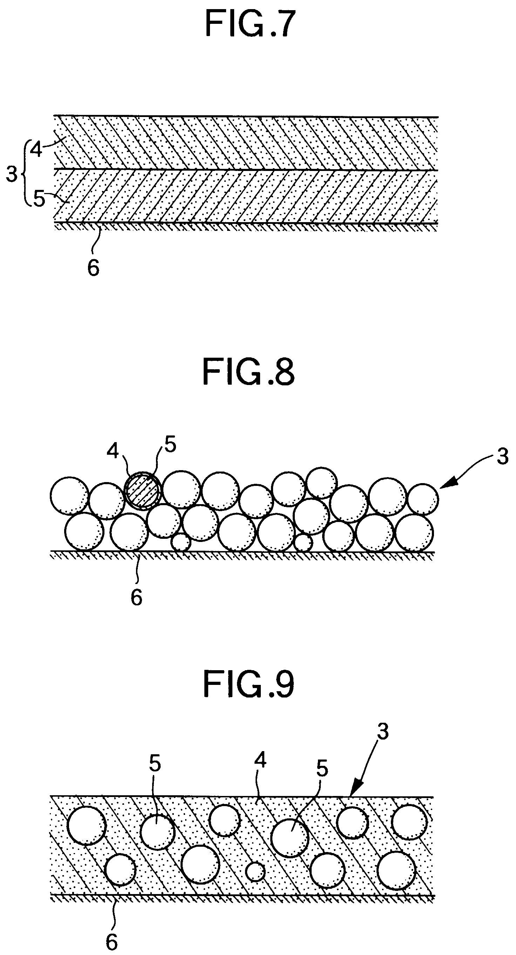

Figs. 7 to 9 show modifications of composite catalyst assemblies 3. The example in Fig. 7 has a structure including a layer formed of NOx catalyst 5 and a layer formed of a modifying catalyst 4, which are laminated in sequence on a honeycomb 6. The example in Fig. 8 has a structure including a modifying catalyst 4 coated onto a grain surface of an NOx catalyst 5 and carried on a honeycomb 6. The example in Fig. 9 has a structure including grains of an NOx catalyst 5 which have been dispersed in a matrix formed of a modifying catalyst 4 and carried on a honeycomb 6.

In addition to the above-described NOx catalysts, those disclosed in Japanese Patent Application Laid-open Nos. 7-31884 and 8-33845 may be used.

According to the present invention, it is possible to provide a composite catalyst assembly in which the modification of the exhaust gas can be promoted to remarkably increase the NOx conversion rate in the excessive-oxygen atmosphere by the above-descried configuration of the composite catalyst assembly.

In addition, according to the present invention, it is possible to provide a modifying catalyst which has an excellent heat resistance and which is suitable as a component for the above-described composite catalyst assembly.

## Claims

1. An exhaust emission control composite catalyst assembly comprising a modifying catalyst for modifying an exhaust gas, and an NOx catalyst for decomposing NOx in the modified exhaust gas, wherein said modifying catalyst includes a rare earth element as an active species.

2. An exhaust emission control modifying catalyst, which is a modifying catalyst for modifying an exhaust gas to supply it to an NOx catalyst, and which includes a rare earth element as an active species.

3. An exhaust emission control composite catalyst assembly according to claim 1 wherein said rare earth element is at least one of Ce, Nd, Pr and La.

4. An exhaust emission control modifying catalyst according to claim 2 wherein said rare earth element is at least one of Ce, Nd, Pr and La.

5. An exhaust emission control composite catalyst assembly according to claim 1 wherein said rare earth element is Ce formed as CeO₂ with crystallites of an average diameter greater than or equal to 12 nm.

6. an exhaust emission control modifying catalyst according to claim 2 wherein said rare earth element is Ce formed as CeO₂ with crystallites of an average diameter greater than or equal to 12 nm.
